**Europäisches Patentamt**

**European Patent Office**

**Office européen des brevets**

(19)

(11) Veröffentlichungsnummer: **0 083 594**
**B1**

(12) # EUROPÄISCHE PATENTSCHRIFT

(45) Veröffentlichungstag der Patentschrift:
**18.03.87**

(51) Int. Cl.⁴: **F 02 P 7/06**, F 02 P 5/04

(21) Anmeldenummer: **82901113.9**

(22) Anmeldetag: **01.04.82**

(86) Internationale Anmeldenummer:
**PCT/DE 82/00076**

(87) Internationale Veröffentlichungsnummer:
**WO 83/00193 (20.01.83 Gazette 83/02)**

(54) **VORRICHTUNG ZUR ERZEUGUNG EINER DREHZAHLABHÄNGIGEN SIGNALFOLGE.**

(30) Priorität: **10.07.81 DE 3127220**

(43) Veröffentlichungstag der Anmeldung:
**20.07.83 Patentblatt 83/29**

(45) Bekanntmachung des Hinweises auf die Patenterteilung:
**18.03.87 Patentblatt 87/12**

(84) Benannte Vertragsstaaten:
**DE FR GB**

(56) Entgegenhaltungen:
**DE-A-1 539 213**
**DE-A-2 916 336**
**FR-A-2 396 176**
**GB-A-1 024 623**
**NL-A-7 611 127**
**US-A-3 357 416**

**Die Akte enthält technische Angaben, die nach dem Eingang der Anmeldung eingereicht wurden und die nicht in dieser Patentschrift enthalten sind.**

(73) Patentinhaber: **ROBERT BOSCH GMBH, Postfach 50, D-7000 Stuttgart 1 (DE)**

(72) Erfinder: **SCHLEUPEN, Richard, Gottlob- Anset-Strasse 6, D-7121 Ingersheim 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

### Stand der Technik

Die Erfindung geht aus von einer Vorrichtung nach der Gattung des Hauptanspruchs. Es ist bekannt, insbesondere bei Zündanlagen, induktive Geberanordnungen zu verwenden, die drehzahlabhängige Spannungen liefern. Diese Spannungen werden einer Schwellenwertstufe zugeführt, die eine drehzahlabhängige Signalfolge liefert. Bei Erhöhung der Drehzahl erhöht sich normalerweise auch die Amplitude vom Geber abgegebenen Spannung. Bei einem konstanten Schwellenwert der Schwellenwertstufe ändert sich infolge der Amplitudenerhöhung der Drehwinkelbereich, bei dem der Schwellenwert überschritten wird. Das hat zur Folge, daß die Zündanlage, bei der die Geberanordnung verwandt wird, eine Eigenverstellung aufweist.

Aus der FR-A-2 396 176 ist eine Zündeinrichtung für Brennkraftmaschinen bekannt, bei der ein Schwellwertschalter einerseits von einer von einem Signalgeber abhängigen Spannung beaufschlagt wird, sowie andererseits mit einem elektrischen Überwachungsglied verbunden ist, das seinerseits wiederum abhängig ist vom Ausgangssignal des Gebers. Mit Hilfe des Überwachungsgliedes wird die Schaltschwelle des Schwellwertschalters verändert. Der Schwellwertschalter vergleicht die Signale an seinen beiden Eingängen, also das Geberausgangssignal und die drehzahlabhängig sich ändernde Schwelle. Auf diese Weise wird erreicht, daß bei sich ändernder Drehzahl der Brennkraftmaschine durch die sich ändernde Schwelle am Eingang des Schwellwertschalters das sich drehzahlabhängig ebenfalls ändernde Ausgangssignal des Gebers am Eingang des Schwellwertschalters kompensiert und das Ausgangssignal des Schwellwertschalters immer bei gleichen Kurbelwellenwinkelstellungen der Brennkraftmaschine eine Zündung auslöst.

Diese Zündeinrichtung hat nun den Nachteil, daß wenigstens zwei signalführende Zuleitungen zum Schwellwertschalter notwendig sind. Dadurch wird die Herstellung der Zündeinrichtung teurer, als wenn beispielsweise als Schwellwertschalter ein Schnitt-Trigger mit fester innerer Schwelle, beispielsweise ein TTL-Baustein SN7414 oder ein Triggereingang eines Mikrocomputers direkt benutzt werden könnte. Aufgrund der doppelten Zuleitung zum Eingang des Schwellwertschalters ist die Zündeinrichtung aus Kostengründen nicht dafür geeignet, teilweise mit in das Gehäuse des eigentlichen Signalgebers integriert zu werden.

### Vorteile der Erfindung

Die erfindungsgemäße Vorrichtung mit den kennzeichnenden Merkmalen des Hauptanspruchs hat demgegenüber den Vorteil, daß durch die Spannungsverschiebung des Gebersignals das so modifizierte Eingangssignal der Schwellenwertstufe den Schwellenwert bei unterschiedlichen Amplituden der Geberspannungen immer beim gleichen Drehwinkel über- bzw. unterschreitet. Damit wird eine Eigenverstellung der Zündanlage vermieden bzw. stark verringert.

### Zeichnung

Ein Ausführungsbeispiel der erfindungsgemäßen Vorrichtung ist in der Zeichnung dargestellt und in der nachfolgenden Beschreibung näher erläutert. Es zeigen Figur 1 eine schaltungsmäßige Ausgestaltung des Ausführungsbeispiels, Figur 2 Spannungsverläufe der erfindungsgemäßen Vorrichtung in Abhängigkeit von der Zeit und Figur 3 Geberspannungen und die Ausgangsspannung der Schwellwertstufe in Abhängigkeit vom Drehwinkel.

### Beschreibung des Ausfürungsbeispieles

Ein induktive Geberanordnung 1, die vorzugsweise mit der Kurbelwelle oder Nockenwelle einer Brennkraftmaschine oder mit einer sonstigen Welle einer Maschine verbunden sein kann, ist über einen Tiefpaß 2 mit der Kathode einer ersten Diode 3 und der Anode einer zweiten Diode 4, einem ersten Widerstand 5 und einem zweiten Widerstand 6 verbunden. Von der Anode der ersten Diode 3 aus ist ein erster Kondensator 7 an Masse geschaltet und dazu parallel liegt ein erster Entladewiderstand 8. Weiterhin liegt an der Anode die erste Diode 3 ein dritter Widerstand 9, der mit dem ersten Widerstand 5 verbunden ist. Der Verbindungspunkt A dieser beiden Widerstände 5, 9 ist über eine dritte Diode 10 mit dem Eingang einer als Schnitt-Trigger ausgebildeten Schwellenwertstufe 11 verbunden, wobei die Anode der dritten Diode am Verbindungspunkt A und die Kathode am Eingang des Schnitt-Triggers 11 liegt. Von der Kathode der zweiten Diode 4 aus liegt ein zweiter Kondensator 12 an Masse und dazu parallel ein zweiter Entladewiderstand 13. Weiterhin ist die Kathode der zweiten Diode 4 über einen vierten Widerstand 14 mit dem zweiten Widerstand 6 verbunden. Der Verbindungspunkt B dieser beiden Widerstände 6, 14 ist über eine vierte Diode 15 an den Eingang des Schmitt-Triggers 11 angeschlossen, wobei die Kathode der vierten Diode 15 am Verbindungspunkt und die Anode am Eingang des Schmitt-Triggers 11 liegt. Die Verbindungspunkte zwischen erstem und drittem Widerstand 5, 9 und zweitem und viertem Widerstand 6, 14 sind über Schutzdioden 16 bis 19 mit Masse verbunden. Die Widerstände 9 und 14 sind etwa doppelt so groß wie die Widerstände 5 und 6.

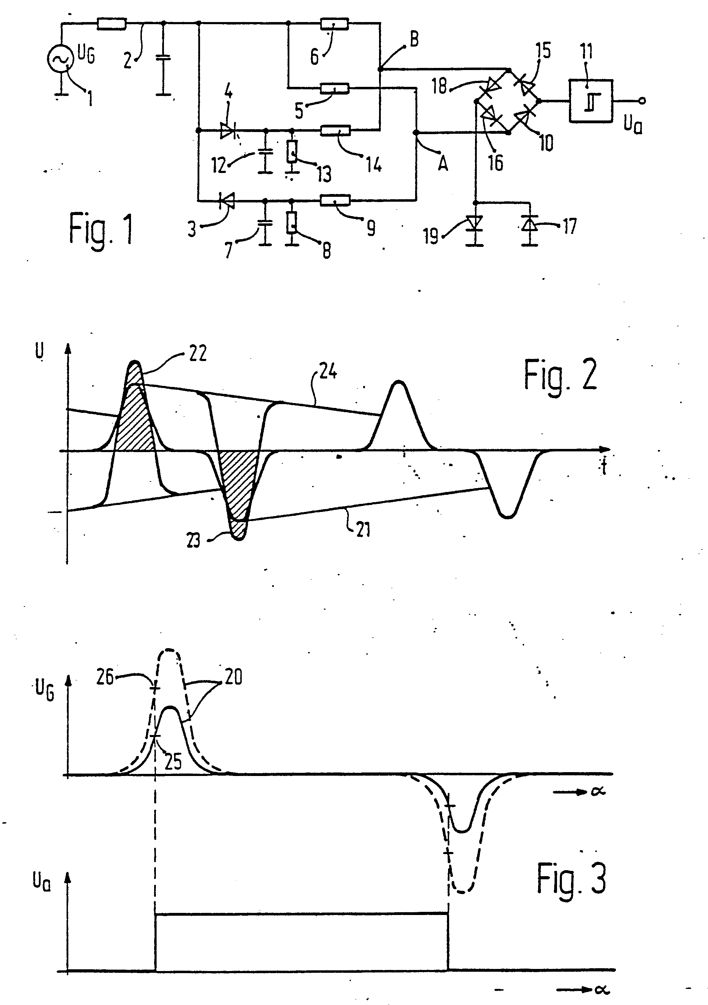

Die Wirkungsweise der in Figur 1 dargestellten Schaltungsanordnung soll im folgenden anhand der in Figur 2 und 3 dargestellten Diagramme erläutert werden. Durch die induktive Geberanordnung 1 wird in Abhängigkeit zur Drehzahl eine Wechselspannung 20 erzeugt, die in Figur 2 in Abhängigkeit von der Zeit und in Figur 3 in Abhängigkeit von Drehwinkel aufgezeichnet ist. Die Geberspannung wird über der Tiefmaß 2 geleitet, um die HF-Spitzen zu eliminieren. Über die erste Diode 3 lädt sich der erste Kondensator 7 auf ungefähr den negativen Scheitelwert der Geberspannung auf und entlädt sich anschließend, wobei der erste Entladewiderstand 8 und der dritte Widerstand 9 die Entladungsgeschwindigkeit bestimmen. Der Entladevorgang ist in Figur 2 durch den Kurvenzug 21 gezeigt. Die Geberspannung wird über den ersten Widerstand 5 zum Verbindungspunkt A weitergeleitet, an dem die doppelt so hoch bewertete Geberspannung 20 und die Entladespannung 21 überlagert werden. Dies ist in Figur 2 durch die Kurve 22, die eine Verschiebung der Geberspannung zu negativen Werten hin zeigt, dargestellt. Die dritte Diode 10 ist in der Weise geschaltet, daß nur positive Spannungen durchgelassen werden. Dieser Bereich ist in Figur 2 schraffiert dargestellt. Der Schwellenwert des Schmitt-Triggers 11 ist derart eingestellt, daß dieser in dem Moment schaltet, wenn die Kurve 22 von negativen Spannungen her durch Null geht.

Entsprechendes gilt für die negative Halbwelle der Geberspannung 20. Über die zweite Diode 4 wird der zweite kondensator 12 positiv bis ungefähr zum Schwellwert der Geberspannung aufgeladen. Am Verbindungspunkt B überlagern sich die Spannungen und es ergibt sich der in Figur 2 mit 23 bezeichnete Kurvenzug. Die vierte Diode 15 läßt nur negative Spannungen durch und der Schmitt-Trigger 11 schaltet, wenn die Spannung 23 von positiven Werten her durch Null geht. Über die Schutzdioden 16 bis 19 wird außerhalb des Schaltbereichs des Schmitt-Triggers 11 ein Teil des Stromes abgeleitet.

Normalerweise vergrößert sich die Amplitude der Geberspannung in Abhängigkeit von der Drehzahl. Diese größere Geberspannung ist im oberen Bild in Figur 3 gestrichelt dargestellt. Wenn sich die Amplitude der Geberspannung 20 erhöht, werden auch die Kondensatoren 7, 12 zu höheren Scheitelwerten aufgeladen, d.h. die Entladespannungen 21, 24 weisen höhere Absolutwerte auf. Bei der Überlagerung der Spannungen an den Verbindungspunkten A, B zeigt es sich, daß durch die Verschiebung der Entladespannungen 21, 24 zu höheren absoluten Werten, der Nulldurchgang der den Kurvenzugen 22, 23 entsprechenden Spannungen in Abhängigkeit vom Drehwinkel konstant bleibt. Dies ist in Figur 3 noch einmal veranschaulicht. Figur 3 unten zeigt die Ausgangsspannung des Schmitt-Triggers 11 in Abhängigkeit vom Drehwinkel. Es ist zu erkennen, daß der Schaltpunkt 25 auf der gestrichelten Linie entsprechend der höheren Geberspannung linear bis zum Schaltpunkt 26 hin verschiebt.

Im vorliegenden Ausführungsbeispiel wird die negative Entladespannung 21 zur Verschiebung der positiven Halbwelle der Geberspannung 20 verwendet, womit bereits eine ausreichende Genauigkeit erreicht wird. Für noch genauere Systeme kann die positive Entladungsspannung zur Verschiebung des Schaltpunktes der positiven Halbwelle der Geberspannung 20 herangezogen Werden, z.B. wenn zwischen dem Verbindungspunkt der Widerstände 5 und 6 mit dem Tiefpaß 2 und dem Verbindungspunkt der Dioden 3 und 4 ein Inverter geschaltet wird.

**Patentansprüche**

1. Vorrichtung zur Erzeugung einer drehzahlabhängigen Signalfolge aus der periodischen Spannung einer induktiven Geberanordnung, insbesondere eines induktiven Segmentgebers, insbesondere zur Steuerung von Zündanlagen einer Brennkraftmaschine, wobei zur Verringerung der drehzahlabhängigen Eigenverstellung der Signalfolge eine Hilfsschaltung vorgesehen ist, die eine drehzahlabhängige Hilfsspannung erzeugt, die zur Vorgabe eines festen Schaltpunkts der Schwellwertstufe in Abhängigkeit vom Drehwinkel ausgewertet wird, dadurch gekennzeichnet, daß die Hilfsspannung vor der Zuführung zur Schwellwertstufe im Sinne des Ausgleichs der Eigenverstellung mit der Geberspannung überlagert wird.

2. Vorrichtung nach Anspruch 1, dadurch gekennzeichnet, daß über eine Diode (3, 4) ein Kondensator (7, 12) durch die Geberspannung aufgeladen wird, daß die an dem Kondensator (7, 12) liegende Spannung mit der Geberspannung überlagert wird und daß vor der Schwellwertstufe (11) eine weitere Diode (10, 15) vorgesehen ist, die die überlagerte Spannung gleichrichtet.

3. Vorrichtung nach Anspruch 2, dadurch gekennzeichnet, daß die eine Diode (3, 4) und die weitere Diode (10, 15) entgegengesetzte Durchlaßrichtungen aufweisen.

4. Vorrichtung nach einem der Ansprüche 1 bis 3, dadurch gekennzeichnet, daß für die negative und die positive Halbschwingung der Geberspannung jeweils ein getrennter Schaltzweig vorgesehen ist, der jeweils eine Diode (3, 4), einen Kondensator (7, 12) und eine weitere Diode (10, 15) aufweist.

## Claims

1. Device for generating a rotational-speed-dependent signal sequence from the periodic voltage of an inductive transmitter arrangement, particularly of a segment-type inductive transmitter, particularly for controlling ignition systems of an internal-combustion engine, in which arrangement, for the purpose of reducing the rotational-speed-dependent self-adjustment of the signal sequence, an auxiliary circuit is provided which generates a rotational-speed-dependent auxiliary voltage which is analysed for defining a fixed operating point of the threshold stage as a function of the rotational angle, characterized in that, before the auxiliary voltage is supplied to the threshold stage, the transmitter voltage is superimposed on the auxiliary voltage in the direction of compensating for the self-adjustment.

2. Device according to Claim 1, characterized in that a capacitor (7, 12) is charged up by the transmitter voltage via a diode (3, 4), that the transmitter voltage is superimposed on the voltage across the capacitor (7, 12) and that in front of the threshold stage (11), another diode (10, 15) is provided which rectifies the superimposed voltage.

3. Device according to Claim 2, characterized in that one diode (3, 4) and the other diode (10, 15) have opposite directions of conduction.

4. Device according to one of Claims 1 to 3, characterized in that in each case a separate circuit branch, which has in each case a diode (3, 4), a capacitor (7, 12) and another diode (10, 15), is provided for the negative and for the positive halfwave of the transmitter voltage.

## Revendications

1. Dispositif pour produire une suite de signaux fonction de la vitesse de rotation à partir de la tension périodique d'une disposition d'émetteur inductif, en particulier d'un émetteur inductif à segments, en particulier pour la commande des installations d'allumage d'un moteur à combustion interne, dans lequel, pour réduire le déplacement propre, fonction de la vitesse de rotation, de la suite de signaux, on prévoit un circuit auxiliaire qui produit une tension auxiliaire fonction de la vitesse de rotation que l'on traite pour obtenir un point de commutation fixe de l'étage à valeur de seuil en fonction de l'angle de rotation, caractérisé en ce qu'avant d'amener la tension auxiliaire à l'étage à valeur de seuil au sens de la compensation du déplacement propre, on lui superpose la tension de l'émetteur.

2. Dispositif selon la revendication 1, caractérisé en ce qu'un condensateur (7, 12) est chargé par la tension de l'émetteur par l'intermédiaire d'une diode (3, 4); en ce que l'on superpose à la tension de l'émetteur la tension prise aux bornes du condensateur (7, 12); et en ce qu'en amont de l'étage à valeur de seuil (11) est prévue une autre diode (10, 15) qui redresse la tension obtenue par superposition.

3. Dispositif selon la revendication 2, caractérisé en ce que l'une des diodes (3, 4) et l'autre diode (10, 15) présentent des sens opposés de passage du courant.

4. Dispositif selon l'une des revendications 1 à 3, caractérisé en ce que pour la demi-oscillation négative et la demi-oscillation positive de la tension de l'émetteur, est respectivement prévue une branche distincte de circuit qui présente respectivement une diode (3, 4), un condensateur (7, 12) et une autre diode (10, 15).

0 083 594

Fig. 1

Fig. 2

Fig. 3

1